# EUROPÄISCHE PATENTSCHRIFT

(11) **EP 1 664 223 B1**
(45) Veröffentlichungstag und Bekanntmachung des Hinweises auf die Patenterteilung: **06.07.2016**
(21) Anmeldenummer: 04765315.9
(22) Anmeldetag: 16.09.2004
(51) Int. Cl.: B29C 37/00, C08G 18/78, C08G 18/66, C09D 175/12, C08G 18/32, C08G 18/38, C08G 18/79

(54) **ZWEIKOMPONENTEN-ZUSAMMENSETZUNG ZUR HERSTELLUNG VON FLEXIBLEN POLYURETHAN-GELCOATS**
TWO-COMPONENT COMPOSITION FOR PRODUCING FLEXIBLE POLYURETHANE GEL COATS
COMPOSITION A DEUX COMPOSANTS SERVANT A PRODUIRE DES ENDUITS GELIFIES SOUPLES EN POLYURETHANNE

(30) Priorität: 23.09.2003 DE 10344379
(43) Veröffentlichungstag der Anmeldung: 07.06.2006
(73) Patentinhaber: Mankiewicz Gebr. & Co. (GmbH & Co. KG), D-21107 Hamburg (DE)
(72) Erfinder: WEHNER, Jochen, 21075 Hamburg (DE)
(74) Vertreter: Uexküll & Stolberg
(86) Internationale Anmeldenummer: PCT/EP2004/010416
(87) Internationale Veröffentlichungsnummer: WO 2005/030893

(56) Entgegenhaltungen:
- EP-A1- 0 511 570
- WO-A-87/07287
- WO-A-03/078534
- DE-A- 19 836 193
- US-A- 3 765 979
- US-A- 6 046 297

## Beschreibung

Die Erfindung betrifft die Verwendung einer Zweikomponenten-Zusammensetzung, die eine Polyolkomponente und eine Polyisocyanatkomponente umfasst, zur Herstellung von flexiblen Polyurethan-Gelcoats für Epoxidharz- und Vinylester-Verbundwerkstoffe. Die Erfindung betrifft außerdem ein Herstellungsverfahren für den Verbundwerkstoff und den Verbundwerkstoff.

Die Oberflächen von Verbundwerkstoffen (beispielsweise Verbundwerkstoffen aus Glasfasergewebe bzw. -vlies und Epoxidharz/Vinylesterharz) sind oft wenig ansehnlich und außerdem nicht licht- und witterungsbeständig. Sie müssen deshalb mit einer Oberflächenbeschichtung versehen werden. Vor der Oberflächenbeschichtung von Epoxidharz/ Vinylesterharz-Verbundwerkstoffen muss geschliffen und gespachtelt werden, da es bei der direkten Oberflächenbeschichtung des Verbundwerkstoffs zur Aufrichtung von Fasern kommt. Eine Alternative dazu ist der Einsatz eines Gelcoats.

Ein Gelcoat ist ein Harzsystem das auf Formteile in Verbundbauweise zur Herstellung glatter Bauteiloberflächen aufgebracht werden kann und gleichzeitig auch eine ansehnliche und gegebenenfalls licht- und witterungsbeständige Oberfläche ergibt. Beim In-Mold-Verfahren wird das Gelcoat-Harzsystem nach dem Vermischen seiner Reaktionskomponenten innerhalb der Verarbeitungszeit (Topfzeit) als erste Schicht in eine Form eingetragen. Die nach dem Gelieren erhaltene Schicht ist ausreichend mechanisch stabil, um bei Auftragen des Kunstharzes (beispielsweise eines Epoxidharzes oder Vinylesterharzes) und gegebenenfalls eines anorganischen oder organischen Vlieses oder Gewebes (beispielsweise eines Glasfasergewebes oder Glasfaservlieses) nicht beschädigt zu werden. Entsprechendes gilt bei Injektionsverfahren und beim Aufbringen von Nasslaminaten sowie beim Aufbringen von Prepregs.

Um eine ausreichende Haftung zwischen (i) Kunstharz (Epoxidharz und/oder Vinylesterharz) und (ii) Gelcoat zu gewährleisten, muss die Beschichtung mit Kunstharz innerhalb der Laminierzeit des Gelcoats-Harzsystems erfolgen. Anschließend werden Kunstharz und Gelcoat-Harzsystem vollständig ausgehärtet.

Bei der Beschreibung der Erfindung gelten die folgenden Begriffsbestimmungen:
- Die Laminierzeit ist der Zeitraum beginnend mit dem Zeitpunkt der Klebefreiheit des in die Form applizierten Gelcoat-Films, in dem der Gelcoat-Film überlaminiert werden muss, um noch eine ausreichende Haftung zwischen Gelcoat und Laminat sicherzustellen.
- Die Topfzeit ist der Zeitraum beginnend mit der Vermischung der beiden Reaktionskomponenten bis zum Gelieren der Reaktionsmischung. Nach Beendigung der Topfzeit ist die Reaktionsmischung nicht mehr verarbeitbar.
- Die Klebfreizeit ist der Zeitraum beginnend mit dem Auftragen der homogenen, angemischten Reaktionsmischung auf die Formoberfläche bis zum Erreichen der Klebfreiheit des applizierten Films.
- Unter Gelzeit wird die in E-DIN VDE 0291-2 (VDE 0291-Teil 2): 1997-06 unter Punkt 9.2.1 beschriebene, bis zum Gelieren der Reaktionsmischung gemessene Zeit verstanden.

Als Gelcoatharzsysteme werden beispielsweise Formulierungen auf Basis radikalisch härtender Harze wie z.B. ungesättigte Polyester (UP), Vinylester oder Acrylat-terminierte Oligomere eingesetzt. Diese Harzsysteme sind bei der Anwendung in Verbindung mit UP-Kunstharzen (UP-Verbundwerkstoffen) verarbeitungssicher und zeigen gute Haftung zu einer Vielzahl von Kunstharzen (Verbundwerkstoffhaftung), da aufgrund der durch Luftsauerstoff inhibierten Härtungsreaktionen an der innen liegenden Gelcoat-Oberfläche ein Aushärten der Grenzfläche erst nach dem Auftragen des Kunstharzes erfolgt. Viele kommerzielle Gelcoats auf UP-Basis, zeigen aber keine ausreichende Glanzbeständigkeit und neigen zu Abkreiden und Haarrissbildung. Weitere Nachteile von Gelcoats auf Basis von UP sind die unvermeidbaren Monomeremissionen, ein häufig sehr starker Schrumpf während des Aushärtens, der zu Spannungen in der Grenzfläche Verbundwerkstoff/Gelcoat - und damit zu schlechter Stabilität der Grenzfläche - führt, sowie die üblicherweise schlechte Haftung gegenüber Verbundwerkstoffen auf Basis von Epoxidharz (EP-Harz) oder Vinylesterharz (VE-Harz).

Zur Anwendung in Verbindung mit EP-Verbundwerkstoffen können beispielsweise EP-Gelcoats (z.B. von der Fa. SP-Systems) eingesetzt werden. EP-Gelcoats zeigen im Vergleich mit UP-Gelcoats eine sehr viel bessere Haftung zu EP-Verbundwerkstoffen. EP-Gelcoats enthalten auch keine flüchtigen Monomeren und sind deshalb arbeitshygienisch weniger bedenklich als die meist styrolhaltigen UP-Gelcoats. Die Nachteile von EP-Gelcoats sind aber
➢ die geringer Toleranz gegenüber Ungenauigkeiten im Mischungsverhältnis, dies kann u.U. im gehärteten Gelcoat zu Verfärbungen und stark verminderter mechanischer Beständigkeit führen,
➢ die stark exotherme Härtungsreaktion, die nur kleine Ansatzgrößen erlaubt,
➢ die sehr plötzlich verlaufende Härtungsreaktion,
➢ die unzureichende Witterungsstabilität,
➢ die sehr schlechte Thermovergilbungsstabilität,
➢ die zumeist hohe Glasübergangstemperatur (70° C, Gelcoat von SP-Systems) und damit die Sprödigkeit des Materials bei Einsatztemperaturen weit unterhalb der Glasübergangstemperatur sowie
➢ der hohe Preis von einigermaßen vergilbungsstabilen EP-Harzen.

Grundsätzlich ist deshalb für Anwendungen, bei denen eine hohe Licht- und Verwitterungsstabilität gefordert ist, Oberflächenbeschichtungen auf Basis von aliphatischen Polyurethanen der Vorzug zu geben. Bei der Formulierung von PU-Gelcoats ist jedoch zu berücksichtigen, dass herkömmliche Mischungen aus Polyol und Polyisocyanat erst bei sehr weit fortgeschrittener Reaktion gelieren. Dann ist aber bereits das Reaktions- und damit das Haftvermögen des PU-Gelcoats gegenüber dem für den Verbundwerkstoff verwendeten Kunstharz stark eingeschränkt (d.h. die Klebfreizeit ist vergleichsweise lang, die Laminierzeit dagegen vergleichsweise kurz). Der Einsatz eines solchen herkömmlichen Produkts wäre prozesstechnisch schwierig zu realisieren und darüber hinaus bezüglich der Haftung Gelcoat/Kunstharz unzuverlässig.

Handelsübliche aliphatische PUR-Gelcoats (von Relius Coatings oder Bergolin) weisen in der Regel vergleichsweise niedrige Glasübergangstemperaturen (< 40 °C) auf. Deshalb sind sie im Vergleich zu EP-Gelcoats weniger spröde und bei Härtungstemperaturen unter 80 °C einsetzbar und mit flüssigen Epoxidharzen überlaminierbar. Die Produkte enthalten in der Regel Reaktivverdünner wie z.B. Polycaprolacton, das unter den üblichen Härtungsbedingungen nicht vollständig abreagiert und dann als Weichmacher wirkt. Die Produkte sind deshalb unmittelbar nach der Entformung sehr flexibel (Bruchdehnung ca. 25%). Sie verspröden aber mit der Zeit, vermutlich durch den Verlust an Weichmachern, so dass ihre Bruchdehnung auf ca. die Hälfte des ursprünglichen Werts absinkt. Bei deutlich über der maximal erreichbaren Glasübergangstemperatur T_{g} des PUR-Gelcoats liegenden Härtungstemperaturen, (> 80 °C) zeigen diese Produkte nach Entformung häufig Oberflächendefekte in Form von Einfallstellen. Dies schränkt den Bereich der Härtungstemperaturen stark ein, in dem ein solches Produkt eingesetzt werden kann.

Die US-A-3 765 979 beschreibt ein System zur Bildung von Rohrformstücken mit mindestens ein Paar von rohrförmigen Bereichen durch das Aufwickeln von mit Harz imprägnierten Fasern um einen Kern. Der Kern wird dabei mit einer Zusammensetzung besprüht, um ein Basis- oder Gelcoat auf dem Kern bereitzustellen. Das Gelcoat kann ein Polyurethanharz sein.

Die WO 87/07287 offenbart lösungsmittelfreie Polyurethan-Sprühzusammensetzungen und ein Verfahren zu deren Aufbringen. Die Zweikomponenten-Zusammensetzung schließt eine isocyanathaltige Komponente und eine Härterkomponente ein. Die Härterkomponente ist zusammengesetzt aus etwa 0 bis etwa 15 Gew.-% von einem oder mehreren Polyaminen oder Alkanolaminen, etwa 10 bis etwa 20 Gew.-% von einem oder mehreren Glykolen mit einem Äquivalentgewicht im Bereich von etwa 30 bis etwa 200, etwa 40 bis etwa 80 Gew.-% von einem oder mehreren hochmolekularen Polyolen oder Polyaminen mit einem Äquivalentgewicht im Bereich von etwa 300 bis etwa 2000 und 1 bis etwa 20 Gew.-% von einem oder mehreren Additiven, um Feuchtigkeit oder Kohlendioxid zu adsorbieren. Die Beschichtungszusammensetzungen der WO 87/07287 werden auf Metall, Holz oder Beton aufgebracht.

Die DE 198 36 193 A1 offenbart ein Verfahren zum Aufbringen einer Oberflächenschicht auf einen Körper, insbesondere Oberflächenschichten für Kunststoffkarosserieteile von Lastkraftwagen. Der Körper der DE 198 36 193 A1 besitzt ein Kern aus einem geschäumten Kunststoff, beispielsweise Polyurethan. Als Oberflächenmaterial wird vorzugsweise ein Kunststoff verwendet, beispielsweise Polyurethan.

Die EP 0 511 570 A1 offenbart Gelmassen, die als druckverteilende Elemente, beispielsweise Rollstuhlkissen, verwendet werden können.

Zur Abkürzung der Prozeßzykluszeiten bei der Fertigung von Epoxy-Laminaten, insbesondere wenn ein Epoxy-Prepreg zum Laminataufbau eingesetzt wird, werden häufig Härtungstemperaturen über 80 °C angewendet. Dies ist auch dann notwendig, wenn an das Laminat hohe Anforderungen bezüglich der Warmformbeständigkeit gestellt werden. Übliche

PUR-Gelcoats zeigen bei Einsatz in Prozessen mit Härtungstemperaturen > 80 °C nach dei Entformung des Bauteils häufig Oberflächendefekte in Form von Einfallstellen. Aus diesem Grund ist der Einsatz von PUR-Gelcoats bei Härtungstemperaturen von > 80 °C nur bedingt möglich und erfordert häufig ein aufwendiges Nacharbeiten zum Glätten der Bauteiloberfläche.

Demzufolge liegt der Erfindung die Aufgabe zugrunde, Komponenten für ein Gelcoat-Harzsystem auf Polyurethan-Basis zur Verfügung zu stellen, die die genannten Nachteile nicht aufweisen. Die Komponenten für das Gelcoat-Harzsystem sollen,
- eine vergleichsweise lange Laminierzeit bei für das Mischen und das Einbringen in die Form ausreichender Topfzeit und für die Filmbildung hinreichenden, aber vergleichsweise kurzen Gel- und Klebfreizeiten ergeben,
- einfach verarbeitbar sein (d.h. keine zusätzliche Geräte für eine Heissapplikation und/oder Sprühapplikation erfordern),
- eine gute Haftung zwischen Gelcoat und Kunstharz ergeben (insbesondere zu Epoxidharzen, bei langen Laminierzeiten),
- ein Gelcoat ergeben, das licht- und witterungsbeständig ist und nicht zur Bildung von Haarrissen neigt,
- eine glatte Bauteiloberfläche, frei von Einfallstellen auch bei Härtungstemperaturen zwischen 80 °C und 130 °C, erzeugen und
- preiswert sein.

Dazu wären zwar Polyurethan-Gelcoats mit einer hohen Vernetzungsdichte grundsätzlich besonders gut geeignet. Eine hohe Vernetzungsdichte setzt den Einsatz eines hochfunktionellen Polyols voraus. Mit der Verwendung eines hochfunktionellen Polyols geht aber eine sehr kurze Laminierzeit einher. Deshalb war es auch eine Aufgabe der vorliegenden Erfindung, Komponenten für ein flexibles Polyurethan-Gelcoat zur Verfügung zu stellen, die einerseits ein Gelcoat mit hoher Vernetzungsdichte ergeben, andererseits aber eine Verlängerung der Laminierzeit ermöglichen.

Diese Aufgabe wird gemäß Anspruch 1 gelöst durch die Verwendung einer Zweikomponenten-Zusammensetzung, welche
A) eine Polyolkomponente, die
   A1) ein oder mehrere niedrigmolekulare Polyole mit einem Molekulargewicht von 160 bis 600 g/mol und einer Hydroxylgruppenkonzentration von 5 bis weniger als 20 mol Hydroxylgruppen je kg niedrigmolekulares Polyol, wobei der Anteil niedrigmolekulares Polyol in der Polyolkomponente, bezogen auf die Gesamtmasse der Bestandteile A1, A2 und A3 der Polyolkomponente, im Bereich von 2 bis 60 Gew.-% liegt,
   A2) ein oder mehrere höhermolekulare Polyole mit einer mittleren Funktionalität von ≥ 2, einem Molekulargewicht von mehr als 600 bis 8000 g/mol und einer Hydroxylgruppenkonzentration von weniger als 5 mol Hydroxylgruppen je kg höhermolekulares Polyol, wobei der Anteil höhermolekulares Polyol in der Polyolkomponente, bezogen auf die Gesamtmasse der Bestandteile A1, A2 und A3 der Polyolkomponente, im Bereich von 97 bis 30 Gew.-% liegt,
   A3) ein oder mehrere lichtbeständige aromatische Amine enthält, wobei der Anteil lichtbeständiges aromatisches Amin in der Polyolkomponente, bezogen auf die Gesamtmasse der Bestandteile A1, A2 und A3 der Polyolkomponente, im Bereich von 0,1 bis 20 Ges.-% liegt, und wobei das lichtbeständige aromatische Amin ein 4,4'-Methylenbis(2,6-dialkylanilin) ist, und
B) eine Polyisocyanatkomponente umfasst, die ein oder mehrere Polyisocyanate enthält,
zur Herstellung von flexiblen Polyurethan-Gelcoats für Kunstharz-Verbundwerkstoffe, wobei das Kunstharz Epoxidharz und/oder Vinylesterharz umfasst und beim Inkontaktbringen mit dem Gelcoat nicht oder nicht vollständig ausgehärtet ist.

Die Erfindung beruht u.a. darauf, dass gefunden wurde, dass lichtbeständige aromatische Amine einer Polyolkomponente zur Herstellung von Polyurethan-Gelcoats zugesetzt werden können und die aus der erfindungsgemäßen Polyolkomponente und einer Polyisocyanatkomponente hergestellte Mischung besonders gute Verarbeitungseigenschaften bei der Herstellung von Polyurethan-Gelcoats aufweist und darüber hinaus ein besonders lichtbeständiges Gelcoat ergibt. Erfindungsgemäße ausgehärtete Gelcoats weisen vorzugsweise eine Shore D Härte von mehr als 65 auf (bestimmt nach DIN EN ISO 868), und die Reissdehnung bei 23 °C ist vorzugsweise größer als 3%, bevorzugter größer als 5%, insbesondere größer als 10% (bestimmt nach ASTM-D-522) und ergeben eine ausgezeichnete Haftung zu Epoxid- und Vinylesterharzen in Verbundwerkstoffen. Als Epoyxidharze und Vinylesterharze sind alle handelsüblichen Materialien geeignet. Der Fachmann ist in der Lage, in Abhängigkeit von der Anwendung des Verbundwerkstoffs ein geeignetes Epoxid- und Vinylesterharz auszuwählen.

Der gehärtete Verbundwerkstoff hat an der Grenzfläche Kunstharz-Polyurethan-Gelcoat eine Haftfestigkeit, die über der Bruchfestigkeit des Laminierharzes liegt, d.h. in der Stempelabrissprüfung tritt ein Kohäsionsbruch im Kunstharzlaminat bzw. Kunstharz auf.

Das Kunstharz umfasst Epoxidharz und/öder Vinylesterharz, d.h. es ist ein Kunstharz auf Basis von Epoxidharz und/oder Vinylesterharz. In einer bevorzugten Ausführungsform ist das Kunstharz Epoxidharz und/oder Vinylesterharz, und in einer besonders bevorzugten Ausführungsform ist das Kunstharz Epoxidharz.

Das eingesetzte Kunstharz ist bei der Herstellung des Verbundwerkstoffs, d.h. beim Inkontaktbringen mit dem Gelcoat, nicht oder nicht vollständig ausgehärtet. Vorzugsweise ist das Polyurethan-Gelcoat beim Inkontaktbringen mit dem Kunstharz (vorzugsweise beim Aufbringen des Kunstharzes) nicht vollständig ausgehärtet. Dies bedeutet, dass in dem Gelcoat beim Inkontaktbringen mit dem Kunstharz (vorzugsweise beim Aufbringen des Kunstharzes) vorzugsweise die Umsetzung von Isocyanat- mit Hydroxylgruppen zu Urethangruppen noch nicht vollständig abgeschlossen ist. Es sind in allen Ausführungsformen Kunstharze bevorzugt, die Glasfasergewebe und/oder Glasfaservlies oder Kohlefasergewebe oder Kohlefasergelege umfassen, wobei das eingesetzte Kunstharz besonders bevorzugt ein Prepreg ist, insbesondere ein Epoxy-Prepreg mit Glasfasergewebe und/oder Glasfaservlies oder Kohlefasergewebe oder Kohlefasergelege, oder ein Injektionsharz.

Dabei ist die Verwendung der Zweikomponenten-Zusammensetzung in einem In-Mold-Verfahren besonders bevorzugt, bei dem das Polyurethan-Gelcoat zum Teil, aber noch nicht vollständig ausgehärtet ist und das Kunstharz beim Inkontaktbringen mit dem Gelcoat nicht oder nicht vollständig ausgehärtet ist. Bei dieser Anwendung ist das Kunstharz vorzugsweise teilweise, aber noch nicht vollständig ausgehärtet, und umfasst insbesondere Verstärkungsmaterial, wie Glasfasergewebe und/oder Glasfaservlies oder Kohlefasergewebe oder Kohlefasergelege.

Bei der Verwendung der Zweikomponenten-Zusammensetzung in einem Injektionsverfahren wird nach dem Eintragen und Angelieren (teilweisen Härten) des Gelcoats Verstärkungsmaterial in die Form eingelegt, die mit Verstärkungsmaterial gefüllte Kavität mit einer Folie abgedichtet und der Hohlraum innerhalb des Verstärkungsmaterials evakuiert. Anschließend wird das vorgemischte (z.B. 2-komponentige) Kunstharz (=Injektionsharz) in den evakuierten Raum eingesaugt und dann vollständig ausgehärtet. Auch in dieser Ausführungsform sind als Verstärkungsmaterialien Glasfasergewebe und/oder Glasfaservlies oder Kohlefasergewebe oder Kohlefasergelege bevorzugt.

### 1. Polyolkomponente

Die erfindungsgemäß eingesetzte Polyolkomponente zeichnet sich dadurch aus, dass sie mindestens ein Polyol mit vergleichsweise geringem Molekulargewicht und vergleichsweise hoher Hydroxylgruppenkonzentration c_{OH} enthält. Das niedrigmolekulare Polyol (bzw. die gegebenenfalls zwei, drei, vier etc. niedrigmolekularen Polyole) führt (führen) dazu, dass bereits zu Beginn der Reaktion der Polyolkomponente mit einer Polyisocyanatkomponente (nach ausreichender Topfzeit und vertretbarer Gelzeit) ein sehr engmaschiges Netzwerk gebildet wird, welches die gewünschte mechanische Stabilität der gelierten Gelcoatschicht sicherstellt.

### Niedrigmolekulares Polyol

Erfindungsgemäß ist ein "niedrigmolekulares Polyol" definiert als ein Polyol mit einem Molekulargewicht von 160 bis 600 g/mol (bevorzugt 180 bis 500 g/mol, bevorzugter 200 bis 450 g/mol und insbesondere 200 bis 400 g/mol) und einer Hydroxylgruppenkonzentration von 5 bis weniger als 20 mol Hydroxylgruppen je kg niedrigmolekulares Polyol. Bevorzugt liegt die Hydroxylgruppenkonzentration c_{OH} im Bereich von 6 bis 15, bevorzugter 9 bis 11 mol Hydroxylgruppen je kg niedrigmolekulares Polyol.

Grundsätzlich sind erfindungsgemäß als niedrigmolekulare Polyole alle geradkettigen oder verzweigten, zur Herstellung von Polyurethanen üblichen Polyole geeignet, beispielsweise Polyetherpolyole (wie Polyoxyethylene oder Polyoxypropylene), Polycaprolatonpolyole, Polyesterpolyole, Acrylatpolyole und/oder Polyole auf Basis dimerer Fettsäuren und deren Mischungen. Beispiele sind die nachfolgend aufgeführten niedrigmolekularen Polyole:
➢ ein Polyol auf Acrylatbasis mit einer Molmasse von 184 g/mol, einer Funktionalität von etwa 2,3 und einem Hydroxylgruppengehalt von 12,5 mol/kg,
➢ ein Polyetherpolyol mit einer Molmasse von 181 g/mol, einer Funktionalität von 3 und einem Hydroxylgruppengehalt von etwa 16,5 mol/kg
➢ ein Umsetzungsprodukt aus Trimethylolpropan und Polycaprolacton mit einer Molmasse von 303 g/mol, einer Funktionalität von etwa 3 und einem Hydroxylgruppengehalt von etwa 10 mol/kg.

Weitere bevorzugte niedrigmolekulare Polyole sind (Tabelle 1):

**Tabelle 1**

| | Mittlere Molmasse | Hydroxylgruppenkonzentration c_{OH} (mol/kg) |
|---|---|---|
| Polycaprolactondiol | 400 | 5 |
| Polycaprolactontriol | 300 | 10 |
| Polyesterpolyol | 400 | 5 |
| Polypropylenoxidtriol | 435 | 6,9 |
| Polypropylenoxidtriol | 200 | 15,6 |
| Polytetramethylenoxiddiol | 250 | 8 |

Der Anteil niedrigmolekulares Polyol (d.h. die Summe aller niedrigmolekularen Polyole in der Polyolkomponente) liegt im Bereich von 2 bis 60 Gew.%, bevorzugt 5 bis 50 Gew.-%, insbesondere 10 bis 45 Gew.-%, wie 20 bis 40 Gew.-%, wobei ein Anteil von 32 bis 38 Gew.-% besonders bevorzugt ist, bezogen auf die Gesamtmasse der Bestandteile A1, A2 und A3 der Polyolkomponente.

### Höhermolekulares Polyol

Das in der erfindungsgemäß eingesetzten Polyolkomponente enthaltene höhermolekulare Polyol kann grundsätzlich jedes zur Herstellung von Polyurethanen übliche Polyol sein, beispielsweise Polyesterpolyol Polyetherpolyol, Polycarbonatpolyol, Polyacrylatpolyol, Polyol auf Basis fettchemischer Rohstoffe wie z.B. dimerer Fettsäuren. oder ein natürliches Öl wie beispielsweise Rizinusöl. Die Polyole müssen eine mittlere Funktionalität von ≥ 2 und eine Hydroxylgruppenkonzentration von weniger als 5, vorzugsweise 1 bis 4,99, bevorzugter 2 bis 4, insbesondere 2,5 bis 3,8 mol Hydroxylgruppen pro kg haben.

Dabei umfassen die Bestandteile A1 und A2 alle in der erfindungsgemäß eingesetzten Polyolkomponente enthaltenen Polyole, d.h. ein Polyol, das kein niedrigmolekulares Polyol gemäß oben genannter Definition ist, gilt für die Zwecke der vorliegenden Beschreibung im Allgemeinen als ein höhermolekulares Polyol. Höhermolekular Polyole weisen ein Molekulargewicht von mehr als 600 bis 8000, bevorzugt mehr als 600 bis 6000, insbesondere mehr als 600 bis 4000 g/mol höhermolekulares Polyol auf.

Geeignete höhermolekulare Polyole sind z.B. in der genannten DE-T-69011540 beschrieben. Bevorzugte höhermolekulare Polyole sind Polyetherpolyole (Polyalkoxylenverbindungen), die durch Polyaddition von Propylenoxid und/oder Ethylenoxid auf Starter niedrigen Molekulargewichts mit OH-Gruppen und einer Funktionalität von 2 bis 8 gebildet werden.

Weitere typische höhermolekulare Polyole sind die Polyesterpolyole, die Esterkondensationsprodukte von Dicarbonsäuren mit Polyalkoholen niedrigen Molekulargewichts darstellen und eine Funktionalität von 2 bis 4 haben, oder Diol-, Triol- oder Tetrol-gestartete Polycaprolactone, wobei solche höhermolekularen Polyesterpolyole bevorzugt sind, die eine Hydroxylgruppenkonzentration im Bereich von 6 bis 15 mol/kg höhermolekulares Polyesterpolyol aufweisen, bevorzugt 8 bis 12 mol Hydroxylgruppen pro kg. Das höhermolekulare Polyol (bzw. die gegebenenfalls zwei, drei, vier etc. höhermolekularen Polyole) der Polyolkomponente stellt (stellen) sicher, dass eine ausreichend lange Laminierzeit zur Verfügung steht. Dies ist wichtig, um eine gute Haftung zum Kunstharz des Verbundwerkstoffs zu erreichen.

Besonders bevorzugte höhermolekulare Polyole sind:
➢ ein Polyol auf Acrylatbasis mit einer Molmasse von 606 g/mol, einer Funktionalität von etwa 2,3 und einem Hydroxylgruppengehalt von 3,8 mol/kg,
➢ ein Polyetherpolyol mit einer Molmasse von 803 g/mol, einer Funktionalität von etwa 3 und einem Hydroxylgruppengehalt von etwa 2,5 mol/kg,
➢ ein Umsetzungsprodukt aus Trimethylolpropan und Polycaprolacton mit einer Molmasse von 909 g/mol, einer Funktionalität von etwa 3 und einem Hydroxylgruppengehalt von etwa 3,3 mol/kg.

Der Anteil höhermolekulares Polyol (d.h. die Summe aller höhermolekularen Polyole) in der Polyolkomponente liegt im Bereich von 80 bis 5 Gew.-%, bevorzugt 60 bis 5 Gew.-%, bevorzugter 80 bis 10Gew.-% und insbesondere 25 bis 10 Gew.-%, bezogen auf die Gesamtmasse der Bestandteile A1, A2 und A3 der Polyolkomponente. In einer bevorzugten Ausführungsform ist die Polyolkomponente frei von aliphatischen Dicarbonsäuren.

### Lichtbeständiges aromatisches Amin mit geringer Reaktivität gegenüber Isocyanaten

Geeignete lichtbeständige aromatische Amine sind z.B. in den US-A-4 950 792, US-A-6 013 692, US-A-5 026 815, US-A-6 046 297 und US-A-5 962 617 offenbart.

Bevorzugte lichtbeständige aromatische Amine zeichnen sich dadurch aus, dass sie, gelöst in Toluol (20 Gew.-% Amin in Toluol), und bei 23 °C gemischt mit einer äquimolaren Menge eines oligomeren HDI-Isocyanats (Hexamethylendiisocyanats) mit einem NCO-Gehalt von etwa 5,2 mol/kg und einer Viskosität im Bereich von 2750 bis 4250 mPas, gelöst in Toluol (80 Gew.-% Isocyanat in Toluol), eine Gelzeit von mehr als 30 Sekunden, bevorzugt mehr als 3 Minuten, bevorzugter mehr als 5 Minuten und insbesondere mehr als 20 Minuten ergeben.

Ein besonders bevorzugtes lichtbeständiges aromatisches Amin ist dadurch gekennzeichnet, dass es, gelöst in Toluol (25 Gew.-% Amin in Toluol) und bei 23 °C gemischt mit einer äquimolaren Menge eines oligomeren HDI-Isocyanats mit einem NCO-Gehalt von etwa 5,2 mol/kg und einer Viskosität im Bereich von 2750 bis 4250 mPas eine Mischung ergibt, wobei die Mischung, auf inerte weiße Prüfplatten aufgebracht und im Umluftofen für 30 Minuten bei 80 °C und dann für 60 Minuten bei 120 °C gehärtet, ein Coating mit einer Trockenschichtdicke von etwa 20 µm ergibt, wobei das Coating bei 300stündiger künstlicher Bewitterung nach ASTM-G-53 (4 Stunden UVB 313, 4 Stunden Kondensation) eine Farbtonänderung Delta E (nach DIN 5033 Teil 4 gemessen und nach DIN 6174 ausgewertet) von höchstens 50 zeigt, bevorzugt höchstens 45, insbesondere höchstens 40, wie höchstens 30.

Erfindungsgemäß eingesetzte lichtbeständige aromatische Amine sind 4,4'-Methylen-bis(2,6-dialkylaniline), bevorzugt die in der US-A-4 950 792 beschriebenen, nichtmutagenen Methylenbisaniline. Besonders geeignet sind die in der folgenden Tabelle 2 aufgelisteten 4,4'-Methylenbis(3-R¹-2-R²-6-R³-aniline).

**Tabelle 2**

| **4,4'-Methylenbis(3-R¹-2-R²-6-R³-aniline)** | | | |
|---|---|---|---|
| | R¹ | R² | R3 |
| Lonzacure M-DMA | H | CH₃ | CH₃ |
| Lonzacure M-MEA | H | C₂H₅ | CH₃ |
| Lonzacure M-DEA | H | C₂H₅ | C₂H₅ |
| Lonzacure M-MIPA | H | C₃H₇ | CH₃ |
| Lonzacure M-DIPA | H | C₃H₇ | C₃H₇ |
| Lonzacure M-CDEA | Cl | C₂H₅ | C₂H₅ |

Das erfindungsgemäß besonders bevorzugte lichtbeständige aromatische Amin ist 4,4'-Methylenbis(3-chlor-2,6-diethylanilin), Lonzacure M-CDEA.

Der Anteil lichtbeständiges aromatisches Amin in der Polyolkomponente (d.h. die Summe aller lichtbeständigen aromatischen Amine in der Polyolkomponente) liegt im Bereich von 0,1 bis 20 Gew.-%, bevorzugt 0,3 bis 10 Gew.-%, bevorzugter 0,5 bis 5 Gew.-% und insbesondere 1 bis 3 Gew.-%, bezogen auf die Gesamtmasse der Bestandteile A1, A2 und A3 der Polyolkomponente.

Dabei sind Zweikomponenten-Zusammensetzungen bevorzugt, die weder in der Polyol- noch in der Polyisocyanatkomponente ein aromatisches Amin enthalten, das nicht lichtstabil ist.

### Katalysatoren

beschleunigen die Polymerisationsreaktion zwischen Polyolkomponente und Polyisocyanatkomponente. Grundsätzlich können in der Polyolkomponente alle zur Verwendung in Polyurethanen bekannten Katalysatoren verwendet werden, bevorzugt die in der DE-T-690 11 540 offenbarten Blei-, Wismut- und Zinn-Katalysatoren, darüber hinaus auch der stark basische Amin-Katalysator Diazabicyclo(2,2,2)octan-1,4 sowie Zirkonverbindungen.

Ein erfindungsgemäß besonders bevorzugter Katalysator zur Verwendung in einer Polyolkomponente ist Dibutylzinndilaurat (DBTL).

Eine erfindungsgemäß eingesetzte Polyolkomponente kann bis zu 1 Gew.-%, bevorzugter 0,05 bis 0,5 Gew.-%, insbesondere etwa 0,3 Gew.-% Katalysator enthalten, beispielsweise 0,3 Gew.-%, bezogen auf die Gesamtmasse der Polyolkomponente.

### Füllstoffe

Die erfindungsgemäße Polyolkomponente enthält bevorzugt größere Mengen eines oder mehrerer Füllstoffe, wobei für die Zwecke der vorliegenden Beschreibung "Pigmentstoffe" in die Definition des Begriffs "Füllstoff" eingeschlossen sind. Bevorzugte Füllstoffe sind Talkum, Dolomit, gefälltes CaCO₃, BaSO₄, Quarzmehl, Kieselerde, Titandioxid, Molekularsiebe und (vorzugsweise *calciniertes*). Kaolin. Der Gehalt einer Polyolkomponente an Füllstoff liegt bevorzugt im Bereich von 10 bis 80 Gew.-%, bevorzugter 20 bis 70 Gew.-%, insbesondere 35 bis 55 Gew.-% wie 40 bis 50 Gew.-%, bezogen auf die Gesamtmasse der Polyolkomponente. Dabei sind Mischungen von Füllstoffen bevorzugt, beispielsweise Mischungen von zwei, drei oder vier Füllstoffen.

Darüber hinaus können in der Polyolkomponente gemahlene Glasfasern enthalten sein, beispielsweise gemahlene Glasfasern einer Länge von weniger als 500 µm. Diese Glasfasern verhindern das Weiterreißen eines eventuellen Risses.

### 2.Polyisocyanatkomponente

Bevorzugt in der Polyisocyanatkomponente eingesetzte Polyisocyanate sind aliphatische Isocyanate, beispielsweise die in der DE-T-690 11 540 auf den Seiten 5 und 6 offenbarten Biuret-Isocyanate. Alle dort genannten Isocyanate sind geeignet.

Dabei ist die Verwendung von solchen aliphatischen Isocyanaten wie 1,6-Hexamethylendiisocyanat (HDI), Isophorondiisocyanat (IPDI), 4,4'-Dicyclohexylmethandiisocyanat (H₁₂MDI), 1,4-Cyclohexandiisocyanat (CHDI), Bis(isocyanatomethyl)cyclohexan (H₆XDI, DDI) und Tetramethylxylylendiisocyanat (TMXDI) bevorzugt. Es wird im Übrigen auf "Szycher's Handbook of Polyurethanes", CRC-Press, Boca Raton, 1999 verwiesen.

Die in der Polyisocyanatkomponente als Füllstoffe einsetzbaren Kieselsäuren sind insbesondere silanisierte pyrogene Kieselsäuren. Durch den bevorzugten Gehalt der Polyisocyanatkomponente an Kieselsäure (einem Thixotropiermittel) wird sichergestellt, dass Polyolkomponente und Polyisocyanatkomponente infolge der ähnlichen Viskositäten der Komponenten gut mischbar sind und darüber hinaus die Mischung der Komponenten an einer vertikalen Fläche bis zu 1 mm Nassschichtdicke nicht abläuft. Die Menge liegt bevorzugt im Bereich von 0,1 bis 5 Gew.%, bevorzugter 0,5 bis 3 Gew.%, insbesondere 1 bis 2 Gew.%, bezogen auf die Gesamtmasse der Polyisocyanatkomponente.

### Katalysatoren

Die der Polyolkomponente zusetzbaren Katalysatoren können auch in der Polyisocyanatkomponente, oder anstelle in der Polyolkomponente in der Polyisocyanatkomponente, in den genannten Konzentrationen enthalten sein, wobei in der Polyisocyanatkomponente als Katalysatoren Zirkonverbindungen bevorzugt sind.

### 3.Additive (Siehe Lehrbuch: "Lackadditive", Johan H. Bielemann, Weinheim, Wiley-VCH, 1998).

Darüber hinaus können entweder die Polyolkomponente oder die Polyisocyanatkomponente, oder beide Komponenten, zusätzlich ein oder mehrere Additive ausgewählt aus Entschäumungsmitteln, Dispergiermitteln und Entlüftungsmitteln enthalten.

### Entschäumungsmittel

können in einer Menge bis 2,0 Gew.-%, bevorzugt bis 1,0 Gew.-% vorhanden sein, bezogen auf die Gesamtmasse der Komponente, in der sie eingesetzt werden.

### Entlüftungsmittel

können in einer Menge bis 2,0 Gew.-%, bevorzugt bis 1,0 Gew.-% enthalten sein, bezogen auf die Gesamtmasse der Komponente, in der sie eingesetzt werden. Viele Entschäumungsmittel wirken gleichzeitig als Entlüftungsmittel.

### Dispergiermittel

können in einer Menge bis 2,0 Gew.-%, bevorzugt bis 1,0 Gew.-% enthalten sein, bezogen auf die Gesamtmasse der Komponente, der sie zugesetzt werden.

Beim Anmischen der Polyolkomponente werden typischerweise die Polyole mit Additiven in einem Vakuum-Dissolver vorgelegt. Die Füllstoffe und Pigmente werden dann im Vakuum in den Polyolen dispergiert. Zum Anmischen der Polyisocyanatkomponente wird üblicherweise das Polyisocyanat vorgelegt und mit den entsprechenden Additiven vermischt. Anschließend werden der Füllstoff und das Thixotropiermittel im Vakuum eindispergiert.

Die relativen Mengen von Polyolkomponente und Polyisocyanatkomponente werden (insbesondere in der erfindungsgemäßen Zweikomponenten-Zusammensetzung) so gewählt, dass Hydroxylgruppen und Isocyanatgruppen im jeweils gewünschten molaren Verhältnis reagieren. Das molare Verhältnis von Hydroxylgruppen zu Isocyanatgruppen (OH : NCO) liegt üblicherweise im Bereich von 1 : 3 bis 3 : 1, bevorzugt 1 : 2 bis 2 : 1, bevorzugter 1 : 1,5 bis 1,5 : 1. Gemäß einer besonders bevorzugten Ausführungsform liegt das Verhältnis OH : NCO nahe einem stöchiometrischen molaren Verhältnis von 1 : 1, d.h. im Bereich von 1 : 1,2 bis 1,2 : 1, bevorzugt 1 : 1,1 bis 1,1 : 1, und insbesondere bevorzugt ist eine äquimolare Umsetzung, d.h. die relativen Mengen Polyolkomponente und Polyisocyanatkomponente werden so gewählt, dass das molare Verhältnis der Hydroxylgruppen zu Isocyanatgruppen bei etwa 1 : 1 liegt.

Die Gelierung der Mischung der zwei Komponenten erfolgt entweder bei Raumtemperatur oder, wenn eine beschleunigte Gelierung gewünscht wird, bei erhöhter Temperatur. Beispielsweise kann bei einer Temperatur von 40°C, 60 °C oder auch 80 °C geliert werden. Bei der besonders bevorzugten Mischung aus den Komponenten der erfindungsgemäßen Zweikomponenten-Zusammensetzung ist aber eine Temperaturerhöhung zur Beschleunigung der Gelierung nicht zwingend notwendig.

Das Kunstharz umfasst vorzugsweise ein oder mehrere Verstärkungsmaterialien, wie beispielsweise Gewebe, Gelege, Vliese oder durch Weben oder Vernähen, Versteppen oder Verkleben von Geweben, Gelegen oder Vliesen hergestellte Vorformlinge. Diese können aus Glas-, Kohlenstoff-, Aramid- oder Polyesterfasern oder aus allen anderen thermoplastischen Kunststofffasern bestehen. Als Verstärkungsmaterialien sind Glasfasergewebe und/oder Glasfaservlies oder Kohlefasergewebe oder Kohlefasergelege bevorzugt.

Wenn die Bildung eines mechanisch ausreichend stabilen Gels abgeschlossen ist, wird innerhalb der Laminierzeit Kunstharz, beispielsweise Epoxidharz und gewünschtenfalls Glasfasergewebe oder Glasfaservlies auf das Gelcoat aufgetragen. Durch erfindungsgemäße Polyolkomponenten und erfindungsgemäße Zweikomponenten-Zusammensetzungen wird erreicht, dass die für das Auflaminieren zur Verfügung stehende Laminierzeit im Bereich von etwa 20 Minuten und 72 Stunden, typischerweise bei etwa 48 Stunden liegt. Das Auflaminierverfahren auf Gelcoats unterscheidet sich nicht von den Laminierverfahren, die ohne Verwendung von Gelcoats angewendet werden und z.B. in "Faserverbundbauweisen" von M. Flemming, G. Ziegmann, S. Roth, Springer, Berlin, Heidelberg, New York, 1996, beschrieben sind. Das Härten der Gelcoats erfolgt üblicherweise bei erhöhter Temperatur.

In einer weiteren Ausführungsform betrifft die Erfindung gemäß Anspruch 14 ein Verfahren zur Herstellung von Kunstharz-Verbundwerkstoffen mit flexiblen Polyurethan-Gelcoats, das
(i) das Mischen einer Zweikomponenten-Zusammensetzung, die
   A) eine Polyolkomponente, die
      A1) ein oder mehrere niedrigmolekulare Polyole mit einem Molekulargewicht von 160 bis 600 g/mol und einer Hydroxylgruppenkonzentration von 5 bis weniger als 20 mol Hydroxylgruppen je kg niedrigmolekulares Polyol, wobei der Anteil niedrigmolekulares Polyol in der Polyolkomponente, bezogen auf die Gesamtmasse der Bestandteile A1, A2 und A3 der Polyolkomponente, im Bereich von 2 bis 60 Gew.-% liegt,
      A2) ein oder mehrere höhermolekulare Polyole mit einer mittleren Funktionalität von ≥ 2, einem Molekulargewicht von mehr als 600 bis 8000 g/mol und einer Hydroxylgruppenkonzentration von weniger als 5 mol Hydroxylgruppen je kg höhermolekulares Polyol, wobei der Anteil höhermolekulares Polyol in der Polyolkomponente, bezogen auf die Gesamtmasse der Bestandteile A1, A2 und A3 der Polyolkomponente, im Bereich von 97 bis 30 Gew.-% liegt,
      A3) ein oder mehrere lichtbeständige aromatische Amine enthält, wobei der Anteil lichtbeständiges aromatisches Amin in der Polyolkomponente, bezogen auf die Gesamtmasse der Bestandteile A1, A2 und A3 der Polyolkomponente, im Bereich von 0,1 bis 20 Gew.-% liegt, und wobei das lichtbeständige aromatische Amin ein 4,4'-Methylenbis(2,6-dialkylanilin) ist, und
   B) einer Polyisocyanatkomponente umfasst, die ein oder mehrere Polyisocyanate enthält
   und mindestens teil weises (und vorzugsweise nur teilweises) Härten der Mischung und
(ii) das Inkontaktbringen der Mischung mit Kunstharz umfasst, wobei das Kunstharz Epoxidharz und/oder Vinylesterharz umfasst und beim Inkontaktbringen mit dem Gelcoat nicht oder nicht vollständig ausgehärtet ist

Außerdem betrifft die Erfindung einen Kunstharz-Verbundwerkstoff mit flexiblem Polyurethan-Gelcoat, der nach dem erwähnten Verfahren erhältlich ist. Ein besonders bevorzugter Verbundwerkstoff ist ein Windflügel, d.h. ein Rotorblatt für Windkraftanlagen, oder ein Teil davon.

Die erfindungsgemäß verwendete Zweikomponenten-Zusammensetzung bietet die folgenden Vorteile:
➢ Sie ist ein System aus lediglich zwei Komponenten und deshalb einfach zu verarbeiten.
➢ Die Topfzeit beträgt lediglich 10 bis 15 Minuten.
➢ Die Mischung aus Polyolkomponente und Polyisocyanatkomponente ist innerhalb von 20 bis 70 Minuten klebfrei, auch bei 0,5 mm Schichtdicke und Raumtemperatur. Dafür ist keine Erwärmung notwendig.
➢ Die Laminierzeit liegt bei Raumtemperatur bei mehr als 72 Stunden, damit sind sehr gute Voraussetzungen für die Haftung zu Epoxidharz- und Vinylesterharz-Laminaten gegeben.
➢ Die Mischung der zwei Komponenten ist bis zu 1 mm Nassschichtdicke an einer vertikalen Fläche ablaufsicher.
➢ Infolge der bevorzugt mit Kieselsäure eingestellten Viskosität der Polyisocyanatkomponente ist eine gute Mischbarkeit der zwei Komponenten gegeben.
> Die bei der Herstellung der zwei Komponenten eingesetzten Verbindungen sind arbeitshygienisch gut handhabbar und bei der Verarbeitung emissionsfrei.
➢ Die zwei Komponenten ergeben, ein transparenter Gelcoat, können deshalb beliebig pigmentiert werden.
➢ Die gemischten Komponenten sind auch als Spachtelmasse oder als Beschichtung, die nicht im In-Mold-Verfahren appliziert werden muss, eirisetzbar.
➢ Die Mischung der Komponenten ist selbstverlaufend.
➢ Eine vollständige Härtung der Mischung der zwei Komponenten kann bereits bei Temperaturen von 50 bis 160 °C innerhalb von 30 Minuten bis 2 Stunden erreicht werden.

Das erfindungsgemäß hergestellte Gelcoat besitzt die folgenden vorteilhaften Eigenschaften:
➢ Gute Bewitterungsstabilität.
➢ Bei kurzer Gel- und Klebfreizeit eine lange Laminierzeit.
➢ Nach der Entformung erhält man glatte Bauteiloberflächen ohne Oberflächendefekte obwohl die Glasübergangstemperatur T_{G} mit ca. 40 °C vergleichsweise niedrig ist.
➢ Hohe Hydrolysebeständigkeit.
➢ Hohe Chemikalienbeständigkeit.
➢ Hohe Abriebbeständigkeit bei gleichzeitig hoher Flexibilität (Tg ≈ 40 °C und Shore Härte D = 74).
➢ Gute Schleifbarkeit. Eine Nachbehandlung des Gelcoats ist im Prinzip nicht notwendig. Werden jedoch große bauteile aus mehreren Einzelteilen zusammengesetzt, ist es erforderlich, die Stoßkanten durch Spachtelmassen zu verschließen. Überschüssiger Spachtel wird in der Regel abgeschliffen. Um glatte Übergänge zu erhalten, ist es notwendig, dass das Gelcoat gut schleifbar ist. Das gleiche gilt, wenn Reparaturarbeiten an einer mechanisch geschädigten Fläche erforderlich werden.
➢ Es ist im Wesentlichen frei von Reaktiwerdünnern und Weichmachern.

Die Erfindung wird durch die folgenden Beispiele verdeutlicht.

### Beispiele

Verwendete Testmethoden sind im Folgenden beschrieben:

### Testmethode 1:

### Hinreichend geringe Reaktivität bevorzugter Amine

Zur Bestimmung der Gelzeit wird das lichtbeständige aromatische Amin, gelöst in Toluol (20 Gew.-% Amin in Toluol), bei 23 °C mit einer äquimolaren Menge eines oligomeren HDI-Isocyanates mit einem NCO-Gehalt von etwa 21,8 % und einer Viskosität des lösungsmittelfreien Isocyanats von 2750 bis 4250 mPas, gelöst in Toluol (80 Gew.-% Isocyanat in Toluol, z.B. Desmodur N3300, Bayer AG) gemischt. Zur Bestimmung der Gelzeit dient ein Sunshine-Geltime-Meter der Firma Sunshine Scientific Instruments.

### Testmethode 2:

### Bewitterungsstabilität eines bevorzugten lichtstabilen aromatischen Amins

Dazu wurde das lichtbeständige aromatische Amin gelöst in Toluol (25 Gew.-% Amin in Toluol) bei 23 °C mit einer äquimolaren Menge eines oligomeren HDI-Isocyanates mit einem NCO-Gehalt von etwa 21,8 % und einer Viskosität des lösungsmittelfreien Isocyanats von 2750 bis 4250 mPas (z.B. Desmodur N3300, Bayer AG) zu einer Mischung gemischt. Die Mischung wurde auf inerte weiße Prüfplatten aufgebracht und im Umluftofen für 30 Minuten bei 80 °C und dann für 60 Minuten bei 120 °C gehärtet. Dies ergab ein Coating mit einer Trockenschichtdicke von etwa 20 µm. Zur Prüfung der Bewitterungsstabilität des Coatings wurden Coating-beschichtete neutrale Probeplatten einer künstlichen Bewitterung nach ASTM-G-53 ausgesetzt (4 Stunden UVB 313, 4 Stunden Kondensation). Die durch die Bewitterung verursachte Farbtonänderung wird nach 150 und 300 Stunden nach DIN 5033 Teil 4 gemessen und nach DIN 6174 ausgewertet Die erhaltenen Delta E-Werte sind ein Maß für die Farbtonabweichung des bewitterten Coatings und damit die Lichtbeständigkeit des aromatischen Amins.

### Testmethode 3:

### Bewitterungsstabilität eines erfindungsgemäßen Gelcoats (Gelcoat Bewitterung)

Eine Polyolkomponente, die ein lichtbeständiges aromatisches Amin enthält, wird mit einer Isocyanatkomponente gemischt und die Mischung wird auf Laminat-Platten aufgebracht und gehärtet. Das erhaltene Gelcoat wird einer künstlichen Bewitterung nach ASTM-G-53 ausgesetzt (4 Stunden UVB 313, 4 Stunden Kondensation). Die dadurch verursachte Farbtonänderung wird nach 900 Stunden nach DIN 5033 Teil 4 gemessen und nach DIN 6174 ausgewertet. Die erhaltenen Delta E-Werte sind ein Maß für die Farbtonstabilität des Gelcoats bei Bewitterung. Die Härtung erfolgte bei 120 °C (1h).

### Testmethode 4:

### Vergilbungsstabilität eines erfindungsgemäßen Gelcoats in einem Test bei erhöhter Temperatur (Thermovergilbung)

Wie im Testmethode 3 beschrieben wurden Gelcoat-beschichtete Laminat-Platten hergestellt. Die Platten wurden 96 Stunden bei 120 °C im Umluftofen gelagert. Die damit verursachte Farbtonänderung wird nach DIN 5033 Tei14 gemessen und nach DIN 6174 ausgewertet. Die erhaltenen Delta E-Werte sind ebenfalls ein Maß für die Farbtonstabilität der Gelcoats.

### Testmethode 5:

### Abrasionsstabilität

Die Abrasionsbeständigkeit der Gelcoats wurde nach ASTM-D-4060, Taber-Abraser, Rolle CS 10, Auflagegewicht 1000 g, nach 500 bzw. 1000 Runden geprüft. Der Abrieb wurde gravimetrisch bestimmt.

Erfindungsgemäß bevorzugte Abriebwerte sind (Tabelle 3):

**Tabelle 3**

| | | Bevorzugt | Besonders bevorzugt | Ganz besonders bevorzugt |
|---|---|---|---|---|
| nach 500 Runden | ≤ 30 mg | ≤ 30 mg | ≤ 20mg | ≤ 15 mg |
| nach 1000 Runden | ≤ 50 mg | ≤ 50 mg | ≤ 40mg | ≤ 30mg |

### Testmethode 6:

### Bestimmung von T_{G}-Werten von Gelcoats

Die Glasübergangstemperatur wurde nach DIN 51007 durch DSC-Messungen bestimmt. Dazu wurden ein ausgehärtete Gelcoat-Probekörper mit einer Rate von 10 K/min von -10 °C auf 250 °C erwärmt und die Glasübergangstemperatur aus dem Wärmefluss durch die Probe nach oben genannter Norm bestimmt. Das dazu eingesetzte Gerät ist ein TC11K mit einer Messzelle DSC 30 der Firma Mettler.

### Testmethode 7:

### Prüfung der Haftung zwischen Gelcoat und Laminat

Ein 3 cm breiter und 20 cm langer Laminatstreifen von ca. 2 mm Dicke, der mit einer 0,7 mm dicken Schicht eines Gelcoats beschichtet ist, wird in einer Biegeprüfung nach DIN EN ISO 1519 über einen 5 mm-Dorn gebrochen. Die Bruchkante wird visuell beurteilt. Es wird unterschieden zwischen:
a) "Keine Haftung": d.h. Ablösung der Gelcoat-Schicht vom Laminat schon vor oder während des Biegeversuchs.
b) "Teilweise Haftung": d.h. Delamination in der Grenzfläche Gelcoat-Laminat (Adhäsionsbruch) beim Bruch.
c) "Vollständige Haftung": d.h. keine Ablösung der Gelcoat-Schicht beim Bruch des Verbundbauteils.

### Beispiel 1: Anwendung der Testmethode 1

Die Gelzeit bei Verwendung lichtbeständiger aromatischer Amine wurde gemäß Testmethode 1 bestimmt. Die Ergebnisse mit Aminen der Firma Lonza sind in der folgenden Tabelle 4 dargestellt:

**Tabelle 4**

| Lichtbeständiges aromatisches Amin | **Gelzeit** |
|---|---|
| M-DEA | 357s=5min57s |
| M-MIPA | 221s=4min41s |
| M-CDEA | 2635s=43min55s |
| M-DIPA | 166s=2min46s |

### Beispiel 2: Anwendung der Testmethode 2

Die Bewitterungsstabilität lichtbeständiger aromatischer Amine wurde gemäß Testmethode 2 bestimmt. Die Ergebnisse sind in der folgenden Tabelle 5 aufgeführt.

**Tabelle 5**

| | Lonzacure M-MIPA | Lonzacure M-DIPA | Lonzacure M-CDEA | Lonzacure M-DEA |
|---|---|---|---|---|
| Delta E 150h | 21,20 | 19,40 | 28,50 | 24,90 |
| Delta E 300h | 23,10 | 21,10 | 30,20 | 24,90 |

### Beispiel 3: Herstellung von Polyolkomponenten

Es wurden Polyolkomponenten formuliert, deren Bestandteile sich aus der folgenden Tabelle 6 ergeben.

**Tabelle 6**

| | PA | PB | PC | PD (Vergleich) |
|---|---|---|---|---|
| Polycaprolactonpolyol (M=900 g/mol, c(OH) 3,3 mol/kg | 30 | | | |
| Polycaprolactonpolyol (M=300 g/mol, c(OH) 10 mol/kg | 60 | | 40 | |
| Polyoxipropylenpolyol (M=3000 g/mol, c(OH) 1 mol/kg | | 30 | | 90 |
| Polyoxypropylenpolyol (M=435 g/mol, c(OH) 6,9 mol/kg) | | 60 | | |
| Polyesterpolyol (M=785 g/mol, c(OH) 3,8 mol/kg) | | | 50 | |
| 4,4-Methylen-bis (3-Chlor-2,6-diethylanilin) | 2 | 2 | 2 | |
| Füllstoffe (Talk, TiO₂) | 60 | 45 | 50 | 50 |
| Molsieb (Zeolith) | 15 | 15 | 25 | 15 |
| Lichtschutzmittel (z.b. HALS, UV-Absorber) | 2,5 | 2,5 | 2,5 | 2,5 |
| **Additive** | 0,5 | 0,5 | 0,5 | 0,5 |
| **Katalysator:** Nach Bedarf zur Einstellung einer Topfzeit von 10 Minuten | | | | |

| | | | | |
|---|---|---|---|---|
| M = Mittlere Molmasse, c(OH) = Konzentration an Hydroxylgruppen | | | | |

### Beispiel 4: Polyisocyanatkomponenten

Unter Verwendung der in der folgenden Tabelle 7 aufgeführten Bestandteile wurden Polyisocyanatkomponenten formuliert.

**Tabelle 7**

| | HA | HB | HC |
|---|---|---|---|
| HDI - Biuret (oligomer, Viskosität = 2,5 Pa * s) | 100 | | |
| HDI - Isocyanurat (oligomer, Viskosität = 3,5 Pa * s) | | 100 | |
| Asymmetrisches HDI-Trimer (Viskosität = 0,7 Pa * s) | | | 100 |
| Pyrogene Kieselsäure | 2 | 2 | 3 |
| Additive | 0,5 | 0,5 | 0,5 |

### Beispiel 5: Herstellung und Untersuchung von Gelcoats

In der folgenden Tabelle 8 sind die Herstellung von Gelcoats und deren Tests zusammengefasst. Die Gelcoats wurden hergestellt, indem je eine Polyolkomponente und eine Polyisocyanatkomponente, auf 20,5 bis 24 °C temperiert, in einem solchen Verhältnis gemischt wurden, dass sich ein stöchiometrisches Verhältnis von Isocyanatgruppen zu Hydroxylgruppen ergab. Die Mischung wurde 3 Minuten gerührt. Die Mischung wurde in einer Schichtdicke von 500 µm auf eine Stahlform aufgetragen, die mit Lösungsmittel entfettet und mit einem Trennmittel, z.B. Zywax Watershield, behandelt worden war.

Nach der Applikation des Gelcoats auf einem mit Trennmittel versehene Stahlplatte als Form wurde mit dem flüssigen EP-Laminierharzsystem "Harz L135" und "Härter 137" der Firma Martin G. Scheuffler, Stuttgart, Deutschland, und einem Glasgelege überlaminiert. Danach wurde der Gelcoat zusammen mit dem Laminat im Vakuum-Sack-Verfahren 6 Stunden lang bei 80 °C ausgehärtet. Die mechanischen Eigenschaften und Beständigkeit der ausgehärteten Gelcoats wurden an freien Filmen bestimmt. Die erhaltenen Versuchsergebnisse sind in der folgenden Tabelle 8 dargestellt.

**Tabelle 8**

| Prüfergebnisse und Abgrenzung zu bisher verfügbaren Gelcoats | | | | | | |
|---|---|---|---|---|---|---|
| | | | | Vergleich | Vergleich | Vergleich |
| | PA/HA | PB/HB | PC/HC | PD/HA | Üblicher PUR-Gelcoat | Üblicher EP-Gelcoat |
| **Haftung** zum Laminat (Testmethode 7) bei 3 h Laminierzeit | Vollständig | Vollständig | Vollständig | Teilweise | Vollständig | Vollständig |
| **Oberflächengüte Visuell** | Keine Einfallstellen Glatte Oberfläche | Keine Einfallstellen Glatte Oberfläche | Keine Einfallstellen Glatte Oberfläche | Einfallstellen Oberflächendefekte | Einfallstellen Oberflächendefekte | Einfallstellen Oberflächendefekte |
| **Stabilität gegenüber Thermovergilbung** (Testmethode 5) **(ΔE)** | 7,3 | n.B. | n.B. | n.B. | 7,9 | 17,1 |
| **Bewitterungsstabilität** (Testmethode 3) (ΔE) | 1,5 | n.B. | n.B. | n.b. | 4,1 | 5,5 |
| **Bruchspannung (N/mm)** | 25 | 7,2 | n.B. | n.B. | 10 | > 25 |
| **Bruchdehnung (%)** | 16 | 37 | n.B. | n.B. | 29 | <2 |
| **Weiterressfestigkeit (N/mm)** | 9 | 3 | n.B. | n.B. | 12 | Spröde brechend |
| **Abrasionsbeständigkeit:** | | | | | | |
| (Testmethode 5) | | | | | | |
| 500 Runden (mg) | 15 | n.B. | n.B. | n.B. | 17 | 13 |
| 1000 Runden (mg) | 29 | n.B. | n.B. | n.b. | 31 | 28 |
| **Glasübergangstemperatur (°C) (Testmethode** 6) | 41 | n.B. | n.B. | n.B. | 35 | 70 |

| | | | | | | |
|---|---|---|---|---|---|---|
| n.B. = nicht bestimmt | | | | | | |

### Ergebnis:

Die erfindungsgemäße Gelcoat-Formulierung zeigt im Vergleich auch nach 72 Stunden Laminierzeit und anschließender 6-stündiger Härtung des Verbundes im Vakuum-Sack bei 80 °C deutlich bessere Haftungseigenschaften als die nicht erfindungsgemäßen PUR-Formulierungen. Die Oberfläche der erfindungsgemäßen Gelcoat-Schicht weist keine Störungen durch Einfallstellen auf und grenzt sich damit von nicht erfindungsgemäßen PUR-Gelcoats ab. Darüber hinaus zeigt die erfindungsgemäße Gelcoat-Formulierung gegenüber sowohl den handelsüblichen PUR- als auch EP-Gelcoat-Formulierungen deutlich verbesserte Vergilbungs- und Bewitterungsbeständigkeit. Die Glasübergangstemperatur des erfindungsgemäßen PUR-Gelcoats liegt mit 40 °C in der Nähe dessen, was von PUR-Gelcoats bekannt ist. Im Unterschied zu handelsüblichen PUR-Gelcoats ergibt der erfindungsgemäße PUR-Gelcoat aber auch bei Härtungstemperaturen über 80 °C nach der Entformung störungsfreie Bauteiloberflächen ohne Einfallstellen.

## Patentansprüche

1. Verwendung einer Zweikomponenten-Zusammensetzung, die
A) eine Polyolkomponente, die
A1) ein oder mehrere niedrigmolekulare Polyole mit einem Molekulargewicht von 160 bis 600 g/mol und einer Hydroxylgruppenkonzentration von 5 bis weniger als 20 mol Hydroxylgruppen je kg niedrigmolekulares Polyol, wobei der Anteil niedrigmolekulares Polyol in der Polyolkomponente, bezogen auf die Gesamtmasse der Bestandteile A1, A2 und A3 der Polyolkomponente, im Bereich von 2 bis 60 Gew.-% liegt,
A2) ein oder mehrere höhermolekulare Polyole mit einer mittleren Funktionalität von ≥ 2, einem Molekulargewicht von mehr als 600 bis 8000 g/mol und einer Hydroxylgruppenkonzentration von weniger als 5 mol Hydroxylgruppen je kg höhermolekulares Polyol, wobei der Anteil höhermolekulares Polyol in der Polyolkomponente, bezogen auf die Gesamtmasse der Bestandteile A1, A2 und A3 der Polyolkomponente, im Bereich von 97 bis 30 Gew.-% liegt,
A3) ein oder mehrere lichtbeständige aromatische Amine enthält, wobei der Anteil lichtbeständiges aromatisches Amin in der Polyolkomponente, bezogen auf die Gesamtmasse der Bestandteile A1, A2 und A3 der Polyolkomponente, im Bereich von 0,1 bis 20 Gew.-% liegt, und wobei das lichtbeständige aromatische Amin ein 4,4'-Methylenbis(2,6-dialkylanilin) ist, und
B) eine Polyisocyanatkomponente umfasst, die ein oder mehrere Polyisocyanate enthält,
zur Herstellung von flexiblen Polyurethan-Gelcoats für Kunstharz-Verbundwerkstoffe, wobei das Kunstharz Epoxidharz und/oder Vinylesterharz umfasst und beim Inkontaktbringen mit dem Gelcoat nicht oder nicht vollständig ausgehärtet ist.

2. Verwendung nach Anspruch 1, **dadurch gekennzeichnet, dass** das Gelcoat bei 23°C eine Bruchdehnung, gemessen nach DIN EN ISO 527, von mindestens 3% aufweist.

3. Verwendung nach Anspruch 1 oder 2, **dadurch gekennzeichnet, dass** das Polyurethan-Gelcoat beim Inkontaktbringen mit dem Kunstharz nicht oder nicht vollständig ausgehärtet ist.

4. Verwendung nach einem der vorhergehenden Ansprüche, **dadurch gekennzeichnet, dass** das eingesetzte Kunstharz ein oder mehrere Verstärkungsmaterialien umfasst.

5. Verwendung nach Anspruch 4, **dadurch gekennzeichnet, dass** das Verstärkungsmittel Glasfasergewebe, Glasfaservlies, Kohlefasergewebe oder Kohlefasergelege ist.

6. Verwendung nach einem der vorhergehenden Ansprüche, **dadurch gekennzeichnet, dass** das lichtbeständige aromatische Amin, gelöst in Toluol, 20 Gew.-% Amin in Toluol, bei 23°C gemischt mit einer äquimolaren Menge eines oligomeren HDI-Isocyanats mit einem NCO-Gehalt von etwa 5,2 mol/kg und einer Viskosität im Bereich von 2750 bis 4250 mPas, gelöst in Toluol, 80 Gew.-% Isocyanat in Toluol, eine Gelzeit von mehr als 30 Sekunden, bestimmt nach E-DIN VDE 0291-2, 1997-06, Punkt 9.2.1, ergibt.

7. Verwendung nach einem der vorhergehenden Ansprüche, **dadurch gekennzeichnet, dass** das lichtbeständige aromatische Amin, gelöst in Toluol, 25 Ges.-% Amin in Toluol, bei 23°C gemischt mit einer äquimolaren Menge eines oligomeren HDI-Isocyanates mit einem NCO-Gehalt von etwa 5,2 mol/kg und einer Viskosität im Bereich von 2750 bis 4250 mPas, eine Mischung ergibt, wobei die Mischung, auf inerte weiße Prüfplatten aufgebracht und im Umluftofen für 30 Minuten bei 80°C und dann für 60 Minuten bei 120°C gehärtet ein Coating mit einer Trockenschichtdicke von etwa 20 µm ergibt, und das Coating bei 300stündiger künstlicher Bewitterung nach ASTM-G-53, 4 Stunden UVB 313, 4 Stunden Kondensation, eine Farbtonänderung Delta E, nach DIN 5033 Teil 4 gemessen und nach DIN 6174 ausgewertet, von höchstens 50.

8. Verwendung nach einem der vorhergehenden Ansprüche, **dadurch gekennzeichnet, dass** das lichtbeständige aromatische Amin 4,4'-Methylenbis(3-chlor-2,6-diethylanilin) ist.

9. Verwendung nach einem der vorhergehenden Ansprüche, **dadurch gekennzeichnet, dass** der Anteil niedrigmolekulares Polyol in der Polyolkomponente, bezogen auf die Gesamt-masse der Bestandteile A1, A2 und A3 der Polyolkomponente, im Bereich von 5 bis 50 Gew.-% liegt.

10. Verwendung nach einem der vorhergehenden Ansprüche, **dadurch gekennzeichnet, dass** die Hydroxylgruppenkonzentration des niedrigmolekularen Polyols im Bereich von 6 bis 15 liegt.

11. Verwerdung nach einem der vorhergehenden Ansprüche, **dadurch gekennzeichnet, dass** das niedrigmolekulare Polyol ausgewählt ist aus geradkettigen oder verzweigten Polycaprolactondiolen, Polycaprolactontriolen, Polycaprolactontetrolen, Polyesterpolyolen, Polypropylenoxidtriolen, Polyetherpolyolen und Polytetramethylenoxiddiolen.

12. Verwendung nach einem der vorhergehenden Ansprüche, **dadurch gekennzeichnet, dass** das höhermolekulare Polyol ausgewählt ist aus Polyesterpolyolen und Polyetherpolyolen, Polycarbonatpolyolen, Polyacrylatpolyolen, Poly-olen auf Basis fettchemischer Rohstoffe wie dimerer Fettsäuren oder natürlichen Ölen wie Rizinusöl.

13. Verwendung nach einem der vorhergehenden Ansprüche, **dadurch gekennzeichnet, dass** das höhermolekulare Polyol eine Hydroxylgruppenkonzentration von 1 bis 4,99 Hydroxylgruppen je kg höhermolekulares Polyol aufweist.

14. Verfahren zur Herstellung von Kunstharz-Verbundwerkstoffen mit flexiblen Polyurethan-Gelcoats, das
(i) das Mischen einer Zweikomponenten-Zusammensetzung, die
A) eine Polyolkomponente, die
A1) ein oder mehrere niedrigmolekulare Polyole mit einem Molekulargewicht von 160 bis 600 g/mol und einer Hydroxylgruppenkonzentration von 5 bis weniger als 20 mol Hydroxylgruppen je kg niedrigmolekulares Polyol, wobei der Anteil niedrigmolekulares Polyol in der Polyolkomponente, bezogen auf die Gesamtmasse der Bestandteile A1, A2 und A3 der Polyolkomponente, im Bereich von 2 bis 60 Gew.-% liegt,
A2) ein oder mehrere höhermolekulare Polyole mit einer mittleren Funktionalität von ≥ 2, einem Molekulargewicht von mehr als 600 bis 8000 g/mol und einer Hydroxylgruppenkonzentration von weniger als 5 mol Hydroxylgruppen je kg höhermolekulares Polyol, wobei der Anteil höhermolekulares Polyol in der Polyolkomponente, bezogen auf die Gesamtmasse der Bestandteile A1, A2 und A3 der Polyolkomponente, im Bereich von 97 bis 30 Gew.-% liegt, und
A3) ein oder mehrere lichtbeständige aromatische Amine enthält, wobei der Anteil lichtbeständiges aromatisches Amin in der Polyolkomponente, bezogen auf die Gesamt-masse der Bestandteile A1, A2 und A3 der Polyolkomponente, im Bereich von 0,1 bis 20 Gew.-% liegt, und wobei das lichtbeständige aromatische Amin ein 4,4'-Methylenbis(2,6-dialkylanilin) ist,
und
B) einer Polyisocyanatkomponente umfasst, die ein oder mehrere Polyisocyanate enthält,
und mindestens teilweises Härten der Mischung und
(ii) das Inkontaktbringen der Mischung mit Kunstharz umfasst, wobei das Kunstharz Epoxidharz und/oder Vinylesterharz umfasst und beim Inkontaktbringen mit dem Gelcoat nicht oder nicht vollständig ausgehärtet ist.

15. Kunstharz-Verbundwerkstoff mit flexiblem Polyurethan-Gelcoat, herstellbar nach dem Verfahren gemäß Anspruch 14.

16. Verbundwerkstoff nach Anspruch 15, **dadurch gekennzeichnet, dass** er ein Windflügel oder ein Teil davon ist.

## Claims

1. Use of a two-component composition that comprises
A) a polyol component that contains
A1) one or more low molecular weight polyols with a molecular weight of 160 to 600 g/mol and a hydroxyl group concentration of 5 to less than 20 mol hydroxyl groups per kg of low molecular weight polyol, wherein the content of low molecular weight polyol in the polyol component is in the range of 2 to 60 wt %, based on the total mass of the components A1, A2 and A3 of the polyol component,
A2) one or more higher molecular weight polyols with an average functionality of ≥ 2, a molecular weight greater than 600 and up to 8000 g/mol and a hydroxyl group concentration of less than 5 mol hydroxyl groups per kg of higher molecular weight polyol, wherein the content of higher molecular weight polyol in the polyol component is in the range of 97 to 30 wt %, based on the total mass of the components A1, A2 and A3 of the polyol component,
A3) one or more light-resistant aromatic amines, wherein the content of light-resistant aromatic amine in the polyol component, based on the total mass of the components A1, A2 and A3 of the polyol component, is in the range of 0.1 to 20 wt %, and wherein the light-resistant aromatic amine is a 4,4'-methylene-bis(2,6-dialkylaniline),
and
B) a polyisocyanate component that contains one or more polyisocyanates,
for the production of flexible polyurethane gel coats for synthetic resin composite materials, wherein the synthetic resin comprises epoxy resin and/or vinyl ester resin and is not, or not completely, cured at the time when it is brought into contact with the gel coat.

2. Use according to claim 1, **characterised in that** at 23 °C the gel coat displays an elongation at break (measured according to DIN EN ISO 527) of at least 3%.

3. Use according to claim 1 or 2, **characterised in that** the polyurethane gel coat is not, or not completely, cured at the time when it is brought into contact with the synthetic resin.

4. Use according to one of the preceding claims, **characterised in that** the synthetic resin used comprises one or more reinforcing materials.

5. Use according to claim 4, **characterised in that** the reinforcing agent is glass fibre fabric, glass fibre mat, carbon fibre fabric or carbon fibre inlay.

6. Use according to one of the preceding claims, **characterised in that** the light-resistant aromatic amine, dissolved in toluene (20 wt % amine in toluene), mixed at 23 °C with an equimolar quantity of an oligomeric HDI isocyanate with an NCO content of about 5.2 mol/kg and a viscosity in the range of 2750 to 4250 mPas, dissolved in toluene (80 wt % isocyanate in toluene) gives a gel time of more than 30 seconds, determined according to E-DIN VDE 0291-2, 1997-06, section 9.2.1).

7. Use according to one of the preceding claims, **characterised in that** the light-resistant aromatic amine, dissolved in toluene (25 wt % amine in toluene), mixed at 23 °C with an equimolar quantity of an oligomeric HDI isocyanate with an NCO content of about 5.2 mol/kg and a viscosity in the range of 2750 to 4250 mPas, affords a mixture, wherein the mixture, when applied onto inert white test plates and cured in a forced-air oven for 30 minutes at 80 °C and then for 60 minutes at 120 °C, affords a coating with a dry layer thickness of about 20 µm, and the coating after 300-hour artificial weathering according to ASTM-G 53 (4 hours UVB 313, 4 hours condensation) gives a colour shade change Delta E (measured according to DIN 5033 part 4 and assessed according to DIN 6174) of at most 50.

8. Use according to one of the preceding claims, **characterised in that** the light-resistant aromatic amine is 4,4'-methylene-bis(3-chloro-2,6-diethylaniline).

9. Use according to one of the preceding claims, **characterised in that** the content of low molecular weight polyol in the polyol component, based on the total mass of the components A1, A2 and A3 of the polyol component, lies in the range of 5 to 50 wt %.

10. Use according to one of the preceding claims, **characterised in that** the hydroxyl group concentration of the low molecular weight polyol lies in the range of 6 to 15.

11. Use according to one of the preceding claims, **characterised in that** the low molecular weight polyol is selected from straight-chain or branched polycaprolactone diols, polycaprolactone triols, polycaprolactone tetrols, polyester polyols, polypropylene oxide triols, polyether polyols and polytetramethylene oxide diols.

12. Use according to one of the preceding claims, **characterised in that** the higher molecular weight polyol is selected from polyester polyols and polyether polyols, polycarbonate polyols, polyacrylate polyols, polyols based on fatty chemical raw materials such as dimeric fatty acids or natural oils such as castor oil.

13. Use according to one of the preceding claims, **characterised in that** the higher molecular weight polyol has a hydroxyl group concentration of 1 to 4.99 hydroxyl groups per kg of higher molecular weight polyol.

14. Process for the production of synthetic resin composite materials with flexible polyurethane gel coats, which process comprises
(i) the mixing of a two-component composition that comprises
A) a polyol component that contains
A1) one or more low molecular weight polyols with a molecular weight of 160 to 600 g/mol and a hydroxyl group concentration of 5 to less than 20 mol hydroxyl groups per kg of low molecular weight polyol, wherein the content of low molecular weight polyol in the polyol component is in the range of 2 to 60 wt %, based on the total mass of the components A1, A2 and A3 of the polyol component,
A2) one or more higher molecular weight polyols with an average functionality of ≥ 2, a molecular weight greater than 600 and up to 8000 g/mol and a hydroxyl group concentration of less than 5 mol hydroxyl groups per kg of higher molecular weight polyol, wherein the content of higher molecular weight polyol in the polyol component is in the range of 97 to 30 wt %, based on the total mass of the components A1, A2 and A3 of the polyol component, and
A3) one or more light-resistant aromatic amines, wherein the content of light-resistant aromatic amine in the polyol component, based on the total mass of the components A1, A2 and A3 of the polyol component, is in the range of 0.1 to 20 wt %, and wherein the light-resistant aromatic amine is a 4,4'-methylene-bis(2,6-dialkylaniline),
and
B) a polyisocyanate component that contains one or more polyisocyanates,
and at least partially curing of the mixture and
(ii) the bringing of the mixture into contact with synthetic resin, wherein the synthetic resin comprises epoxy resin and/or vinyl ester resin and is not, or not completely, cured at the time when it is brought into contact with the gel coat.

15. Synthetic resin composite material with a flexible polyurethane gel coat, producible by the process according to claim 14.

16. Composite material according to claim 15, **characterised in that** it is a wind vane or a part thereof.

## Revendications

1. Utilisation d'une composition à deux composants, qui contient
A) un composant polyol, qui comprend
A1) un ou plusieurs polyols à faible masse moléculaire, ayant une masse moléculaire de 160 à 600 g/mole et une concentration des groupes hydroxyle de 5 à moins de 20 moles de groupes hydroxyle par kg de polyol à faible masse moléculaire, la proportion du polyol à faible masse moléculaire dans le composant polyol étant, par rapport à la masse totale des constituants A1, A2 et A3 du composant polyol, comprise dans la plage de 2 à 60 % en poids,
A2) un ou plusieurs polyols à grande masse moléculaire, ayant une fonctionnalité moyenne ≥ 2, une masse moléculaire supérieure à 600 et allant jusqu'à 800 g/mole et une concentration des groupes hydroxyle inférieure à 5 moles de groupes hydroxyle par kg de polyol à grande masse moléculaire, la proportion du polyol à grande masse moléculaire dans le composant polyol étant, par rapport à la masse totale des constituants A1, A2 et A3 du composant polyol, comprise dans la plage de 97 à 30 % en poids,
A3) une ou plusieurs amines aromatiques résistantes à la lumière, la proportion de l'amine aromatique résistante à la lumière dans le composant polyol étant, par rapport à la masse totale des constituants A1, A2 et A3 du composant polyol, comprise dans la plage de 0,1 à 20 % en poids, et l'amine aromatique résistante à la lumière étant une 4,4'-méthylènebis(2,6-dialkylaniline), et
B) un composant polyisocyanate, qui contient un ou plusieurs polyisocyanates,
pour la fabrication d'enduits gélifiés souples de polyuréthanne pour des matériaux composites à base de résines synthétiques, la résine synthétique comprenant une résine époxyde et/ou une résine d'ester vinylique, et n'étant pas durcie, ou n'étant pas entièrement durcie, lors de sa mise en contact avec l'enduit gélifié.

2. Utilisation selon la revendication 1, **caractérisée en ce que** l'enduit gélifié présente à 23°C un allongement à la rupture, mesuré selon DIN EN ISO 527, d'au moins 3 %.

3. Utilisation selon la revendication 1 ou 2, **caractérisée en ce que** l'enduit gélifié de polyuréthanne n'est pas durci, ou n'est pas entièrement durci, lors de sa mise en contact avec la résine synthétique.

4. Utilisation selon l'une des revendications précédentes, **caractérisée en ce que** la résine synthétique utilisée comprend un ou plusieurs matériaux de renfort.

5. Utilisation selon la revendication 4, **caractérisée en ce que** l'agent de renfort est un tissu de fibres de verre, un non-tissé de fibres de verre, un tissu de fibres de carbone ou une grille de fibres de carbone.

6. Utilisation selon l'une des revendications précédentes, **caractérisée en ce que** l'amine aromatique résistante à la lumière présente, dissoute dans le toluène à 20 % en poids d'amine dans le toluène, mélangée à 23°C avec une quantité équimolaire d'un isocyanate HDI oligomère ayant une teneur en NCO d'environ 5,2 moles/kg et une viscosité comprise dans la plage de 2750 à 4250 mPa.s, dissous dans le toluène à 80 % en poids d'isocyanate dans le toluène, un temps de gélification supérieur à 30 secondes, mesuré selon E-DIN VDE 0291-2, 1997-06, Point 9.2.1.

7. Utilisation selon l'une des revendications précédentes, **caractérisée en ce que** l'amine aromatique résistante à la lumière, dissoute dans le toluène à 25 % en poids d'amine dans le toluène, mélangée à 23°C avec une quantité équimolaire d'un isocyanate HDI oligomère ayant une teneur en NCO d'environ 5,2 moles/kg et une viscosité comprise dans la plage de 2750 à 4250 mPa.s, donne un mélange, le mélange, appliqué sur des panneaux d'essai blancs inertes et durcis au four à circulation d'air pendant 30 minutes à 80°C puis pendant 60 minutes à 120°C, donnant un revêtement ayant une épaisseur de feuil sec d'environ 20 µm, et le revêtement présentant, après 300 heures d'une exposition artificielle aux intempéries selon ASTM-G-53, 4 heures d'exposition aux UVB 313, 4 heures de condensation, une variation de sa teinte Delta E, mesurée selon DIN 5033 Partie 4 et évaluée selon DIN 6174, d'au plus 50.

8. Utilisation selon l'une des revendications précédentes, **caractérisée en ce que** l'amine aromatique résistante à la lumière est la 4,4'-méthylènebis(3-chloro-2,6-diéthyl-aniline).

9. Utilisation selon l'une des revendications précédentes, **caractérisée en ce que** la proportion du polyol à faible masse moléculaire dans le composant polyol est, par rapport à la masse totale des constituants A1, A2 et A3 du composant polyol, comprise dans la plage de 5 à 50 % en poids.

10. Utilisation selon l'une des revendications précédentes, **caractérisée en ce que** la concentration des groupes hydroxyle dans le polyol à faible masse moléculaire est comprise dans la plage de 6 à 15.

11. Utilisation selon l'une des revendications précédentes, **caractérisée en ce que** le polyol à faible masse moléculaire est choisi parmi les polycaprolactonediols, les polycaprolactonetriols, les polycaprolactonetétroles, les polyesterpolyols, les poly(oxyde de propylène)triols, les polyétherpolyols et les poly(oxyde de tétraméthylène)diols, à chaîne droite ou ramifiée.

12. Utilisation selon l'une des revendications précédentes, **caractérisée en ce que** le polyol à grande masse moléculaire est choisi parmi les polyesterpolyols et les polyétherpolyols, les polycarbonatepolyols, les polyacrylatepolyols, les polyols à base de matières premières de la chimie des corps gras, tels que les acides gras dimères ou les huiles naturelles, telles que l'huile de ricin.

13. Utilisation selon l'une des revendications précédentes, **caractérisée en ce que** le polyol à grande masse moléculaire présente une concentration des groupes hydroxyle de 1 à 4,99 groupes hydroxyle par kg de polyol à grande masse moléculaire.

14. Procédé de fabrication de matériaux composites à base de résines synthétiques avec des enduits gélifiés de polyuréthanne souples, qui comprend
(i) le mélange d'une composition à deux composants, qui comprend
A) un composant polyol, qui comprend
A1) un ou plusieurs polyols à faible masse moléculaire, ayant une masse moléculaire de 160 à 600 g/mole et une concentration des groupes hydroxyle de 5 à moins de 20 moles de groupes hydroxyle par kg de polyol à faible masse moléculaire, la proportion du polyol à faible masse moléculaire dans le composant polyol étant, par rapport à la masse totale des constituants A1, A2 et A3 du composant polyol, comprise dans la plage de 2 à 60 % en poids,
A2) un ou plusieurs polyols à grande masse moléculaire, ayant une fonctionnalité moyenne ≥ 2, une masse moléculaire supérieure à 600 et allant jusqu'à 8000 g/mole et une concentration des groupes hydroxyle inférieure à 5 moles de groupes hydroxyle par kg de polyol à grande masse moléculaire, la proportion du polyol à grande masse moléculaire dans le composant polyol étant, par rapport à la masse totale des constituants A1, A2 et A3 du composant polyol, comprise dans la plage de 97 à 30 % en poids,
A3) une ou plusieurs amines aromatiques résistantes à la lumière, la proportion de l'amine aromatique résistante à la lumière dans le composant polyol étant, par rapport à la masse totale des constituants A1, A2 et A3 du composant polyol, comprise dans la plage de 0,1 à 20 % en poids, et l'amine aromatique résistante à la lumière étant une 4,4'-méthylènebis(2,6-dialkylaniline), et
B) un composant polyisocyanate, qui contient un ou plusieurs polyisocyanates,
et le durcissement au moins partiel du mélange, et
(ii) la mise en contact du mélange avec une résine synthétique, la résine synthétique comprenant une résine époxyde et/ou une résine d'ester vinylique, et n'état pas durcie, ou n'étant pas entièrement durcie, lors de sa mise en contact avec l'enduit gélifié.

15. Matériau composite de résine synthétique avec un enduit gélifié de polyuréthanne souple, pouvant être fabriqué par le procédé selon la revendication 14.

16. Matériau composite selon la revendication 15, **caractérisé en ce qu'**il s'agit d'une pale d'éolienne ou d'une partie de cette dernière.
